**Europäisches Patentamt**

**European Patent Office**

**Office européen des brevets**

(11) Publication number: **0 125 115**

**A1**

(12) # EUROPEAN PATENT APPLICATION

(21) Application number: **84303002.4**

(22) Date of filing: **03.05.84**

(51) Int. Cl.³: **B 65 F 3/26**
**B 60 P 1/28**

(30) Priority: **05.05.83 ZA 833198**

(43) Date of publication of application:
**14.11.84 Bulletin 84/46**

(84) Designated Contracting States:
**DE FR GB NL SE**

(71) Applicant: **Isakow, Raymond Israel**
**Plot 280 Sundra**
**Transvaal(ZA)**

(72) Inventor: **Du Plessis, Petrus Albertus**
**Plot 156**
**Eloff Transvaal(ZA)**

(72) Inventor: **Isakow, Raymond Israel**
**Plot 280**
**Sundra Transvaal(ZA)**

(74) Representative: **Richards, David John et al,**
**Page, White & Farrer 5, Plough Place New Fetter Lane**
**London EC4A 1HY(GB)**

(54) **Tipper trucks and accessories for tipper trucks.**

(57) A vehicle 1 is fitted with a load box 3 arranged to be tipped to discharge a load; the load box 3 being fitted with an ejector assembly 6 which comprises a pair of hingeably connected plate members constituting a false end wall 61 and a false floor 62, the false end wall 61 being hingeably mounted at a top edge thereof to the load box 3.

FIG 1

- 1 -

TIPPER TRUCKS AND ACCESSORIES FOR TIPPER TRUCKS

THIS invention relates to tipping trucks and to accessories for tipping trucks.

It is well known in the trade that it is often difficult to effect a complete discharge of a load from a tipper truck by simply lifting the load box. This problem manifests itself generally when the load is composed of a moist or tacky particulate or granular material such as sand, bulk granular fertilizer or the like. An incomplete discharge of material may lead to several unacceptable conditions. Thus the adherence of moist material to the sides and floor of a tipper load box may bring about corrosion of the load box. Also, the remains of a previous load could contaminate a subsequent load. It will also be realised that a buyer of a load so transported expects to receive everything that he pays for.

In order to effect complete discharge of the load, it is common practice amongst tipper truck drivers to jerk the truck or the hydraulic system by which the load box is tipped while the load box is in inclined tipping disposition. Clearly the tipper truck is not designed for such handling and often severe damage to the truck results from such handling.

To improve load discharge characteristics of load vehicles, it has previously been suggested to provide the storage compartments of load trucks used in refuse collection with load ejector means. Such ejector means as have been suggested typically comprise an ejector plate disposed across the container at or near the inward end thereof, the plate being supported solely by hinges along its upper edge and its lower edge being sufficiently clear of the floor of the container to allow the plate to pivot about its hinge at least in the direction of the discharge zone of the storage compartment.

In the arrangements of prior art of which applicant is aware, the pivotal movement of such ejector plates is invariably assisted by means of impetus imparting means such as springs [as in U.S. Patent Number 3 688 944] or hydraulic rams [as in U.S. Patent Number 2 826 321]. Pivotably mounted load ejector systems have also been suggested for use on non-tipping vehicles, but again it is essential for the ejector system to incorporate an hydraulic ram to activate the system as disclosed in U.S. Patent Number 2 561 608.

It is an object of the present invention to provide a tipper truck of improved tipping efficiency and to provide a relatively inexpensive accessory to a tipper truck by which the tipping efficiency of the truck may be improved.

In this specification the expression "load box" is used to designate an assembly including a floor structure and a peripheral upstanding wall structure defining a pair of opposing side walls, an end wall substantially at right angles to the side walls and a discharge zone opposite the end wall. The discharge zone may be in the form of an interruption or opening in the wall structure and may be provided with a door formation hinged at an upper or lower edge thereof. Suitable locking latches may be provided for the door formation to maintain it in closed condition while the load is being transported. In a variation of the load box, the discharge zone may also be disposed above a section of the wall structure so that discharge will in use be effected across in this section. In the arrangement of the present invention the end wall of the load box need not necessarily be a solid wall but may simply be in the form of a frame. The discharge zone and end wall of the load box may be disposed either parallel to or transverse to the intended direction of travel of a vehicle of which the load box forms part.

According to the invention there is provided a vehicle comprising a wheeled chassis and a load box mounted thereon for tipping movement relative to the chassis to discharge a load therefrom, the load box being constituted by a construction including a floor formation and a peripheral upstanding wall structure which wall structure defines a pair of opposed side walls, an end wall extending between the side walls at one end of the load box and a discharge zone disposed opposite the end wall, the vehicle being characterised in that the load box includes at least one ejector assembly disposed at or near the end wall and comprising a first plate element which extends upwardly and which is hingeably connected at a top edge thereof to the load box for pivotal movement about an axis which extends substantially parallel to two planes which respectively contain the end wall and the floor, and hingeably connected at the lower edge thereof to an edge of a second plate structure which second plate structure overlies part of the floor of the load box and which second plate structure includes contact zones at which it is in contact with the floor of the load box at least when the load box is in non-tipping disposition on the chassis.

Preferably according to the invention the load box is provided with a single ejector assembly having a first plate element of a shape complementary to the interior cross-sectional configuration of the load box in the area adjacent the end wall.

Thus, in a tipper truck having a load box of rectangular cross sectional configuration the first plate element may be constituted by a rectangular plate.

The upper edge of the first plate element may be connected to the upper edge of the end wall of the load box by means of any suitable hinge for tion so that the first plate element overlies the end wall while the load box is in horizontal or transport disposition and hangs substantially vertically when the load box is in tipping disposition.

Alternatively the load box may be provided with a plurality of ejector assemblies disposed in side by side relationship and having first plate elements of a collective shape complementary to the interior cross-sectional configuration of the load box in the area adjacent the end wall.

It will be appreciated that the first plate element would perform a sweeping function over a substantial length of the load box during the tipping operation thus assisting in dislodging material which may tend to stick to the floor and side walls adjacent the end wall.

It will further be appreciated that the ejector assembly of the invention may be seen to comprise two hingeably inter-connected segments, the segments respectively constituting a false end wall segment and a false floor segment, the upper extremity of the false end wall segment being hingeably connected to the end wall or side walls to pivot about an axis substantially parallel to the end wall and disposed at or towards the upper edge of the end wall.

The second plate structure may be constituted by a single plate element. Alternatively the second plate structure may be of multiplate construction comprising two or more plate elements hingeably interconnected to one another along edges thereof which extend transversely of the load box.

The second plate member of the ejector assembly may be provided along side edges thereof with supplementary plate members which are pivotably connected to the second plate member to provide a composite false floor arrangement which closely follows the floor configuration of the load box.

The plate formations may be provided with suitable covers arranged to extend over the hinges to prevent direct contact between a load in the load box and hinges. The covers could of course also be arranged to serve to prevent the material of the load to drop through the joints defined between adjacently disposed plate elements.

The free edges of the plate elements may be trimmed by means of a wear resistant resilient material to ensure intimate contact between the plate elements and the side walls and floor of the load box, yet preventing excessive wear of the walls and floor.

Preferably the contact zones of the second plate element are constituted by a roller arrangement by which it is in contact with the floor of the load box.

The arrangement may further include means for ensuring the proper return of the ejector assembly to its load transport disposition upon the load box being lowered to its load transport disposition. Thus a cable may be provided which is connected at its one end to the lower zone of the first plate element and connectable at its other end to an anchor arrangement fast with the chassis of the vehicle.

The vehicle may be in the form of a road, off-road or rail vehicle and the load box may be arranged for rear or side discharge both through a side gate or over a side wall. The vehicle may be self-propelled or adapted to be drawn by a prime mover and may therefor be in the form of a semi-trailer, drawbar trailer or fixed chassis construction.

The invention further extends to an ejector assembly of the type described above which is adapted to be connected to an end wall of a tipper vehicle end wall to convert it to a vehicle as set out above. The invention also extends to a load box including an ejector arrangement as described.

Without thereby limiting the scope of the invention some embodiments thereof will now be described with reference to the accompanying drawings in which:

Figure 1    is a perspective view of a tipper truck according to the invention;

Figure 2    is a perspective view, partly broken away of an alternative load box of a tipper truck according to the invention;

Figure 3    is a perspective view of yet a further alternative load box of a tipper truck according to the invention;

Figure 4    is a detailed perspective view of a load box with the side walls not shown and the false floor segment of the ejector assembly partly broken away.

Referring to the accompanying drawings a tipper truck 1 comprises a chassis 2, a load box 3 and a cabin 4.

The load box 3 comprises a floor 3a, side walls 3b and 3c, an end wall 3d and a door 3e closing a discharge opening [not indicated]. A latch arrangement 5 is provided to maintain the door in closed position.

An ejector assembly 6 is mounted to the end wall 3d of the load box.

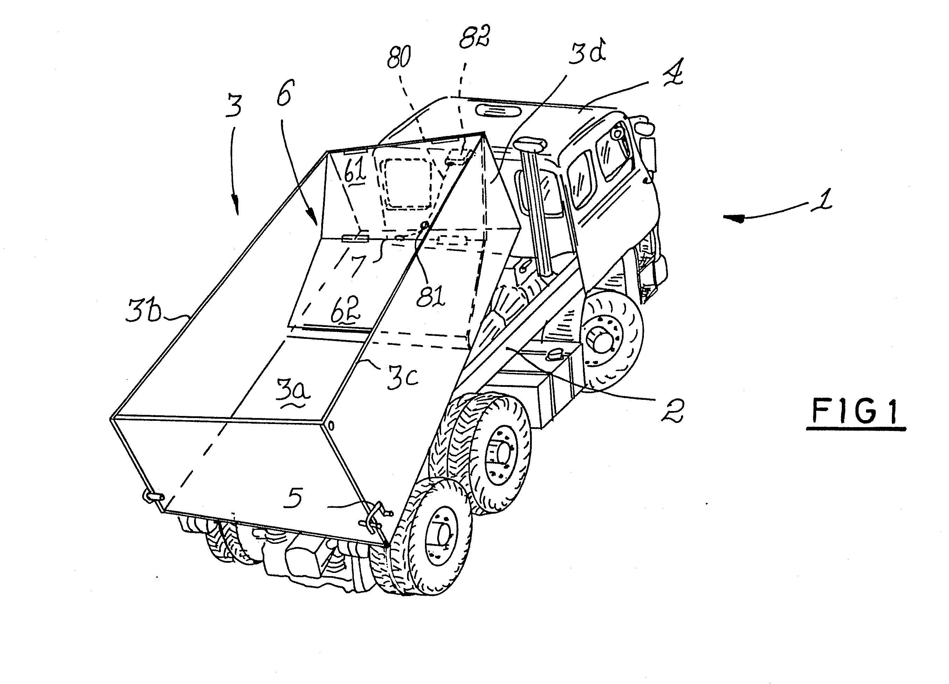

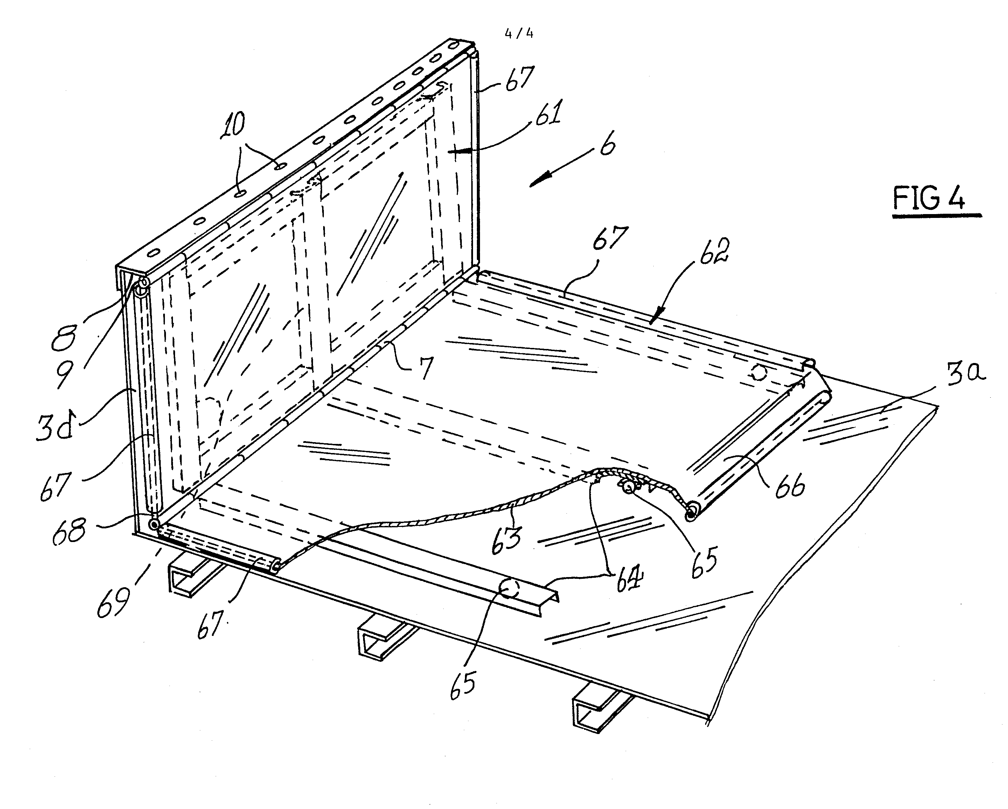

The ejector assembly 6 illustrated in Figures 1 and 4 comprise two segments namely a false end wall segment 61 [constituted by a first metal plate element 68 and frame members 69] and a false floor segment 62 [constituted by a second metal plate element 63 and frame members 64] which segments are interconnected by means of a hinge 7. The upper edge of segment 61 is hingeably connected to a mounting bar 8 [see Figure 4] by means of a hinge 9. The mounting bar 8 is in turn secured to the upper edge of the end wall 3b of the load box 3 by means of bolts 10.

The metal plate elements 63 and 68 constituting part of the segments 61 and 62 are riveted or otherwise secured respectively to the frame members 64 and 69.

The frame members 64 of the false floor segment 62 are provided with rollers 65 which constitute the contact surface between the false floor segment 62 and the floor 3a of the load box.

The free end 66 of the false floor segment 62 of the second plate element 6 is turned down to be in closely spaced relationship to the floor 3a and the edges of the ejector assembly 6 are provided with tubular rubber trim tubes 67 which are in sliding contact repsectively with the floor 3a and side walls 3b and 3c.

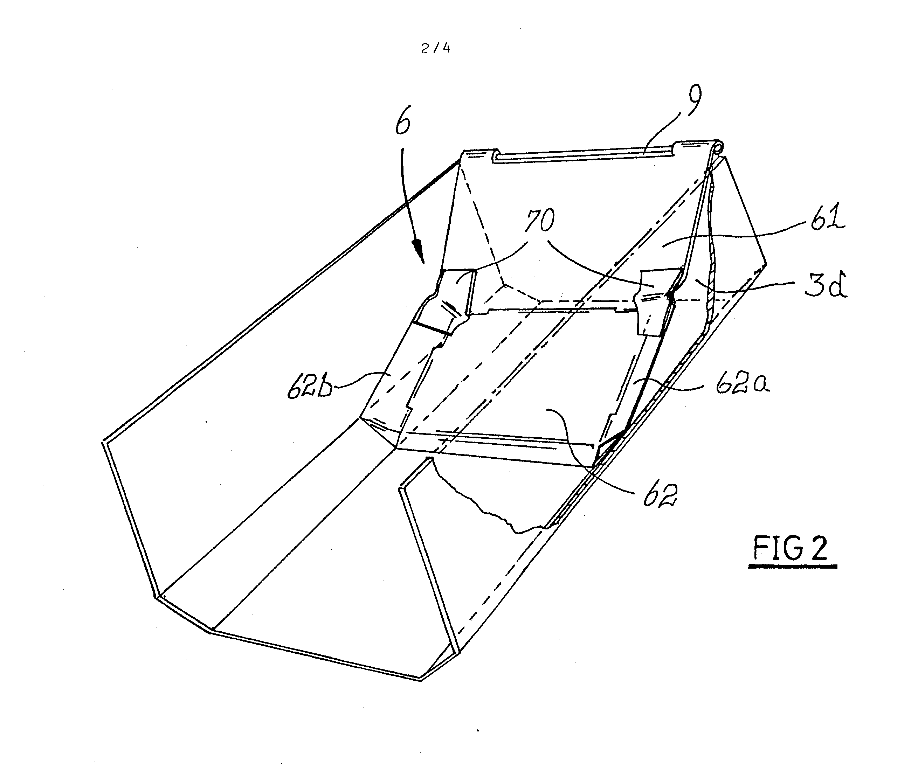

Referring now more particularly to Figure 2, it will be seen that the load box is of five-sided cross sectional configuration. Consequently the false floor segment of the ejector assembly is provided with hinged side or supplementary plates 62a and 62b and cover flaps are provided on the plates in the hinge region to extend over the hinges thereby to prevent material from dropping through the ejector assembly during tipping operations.

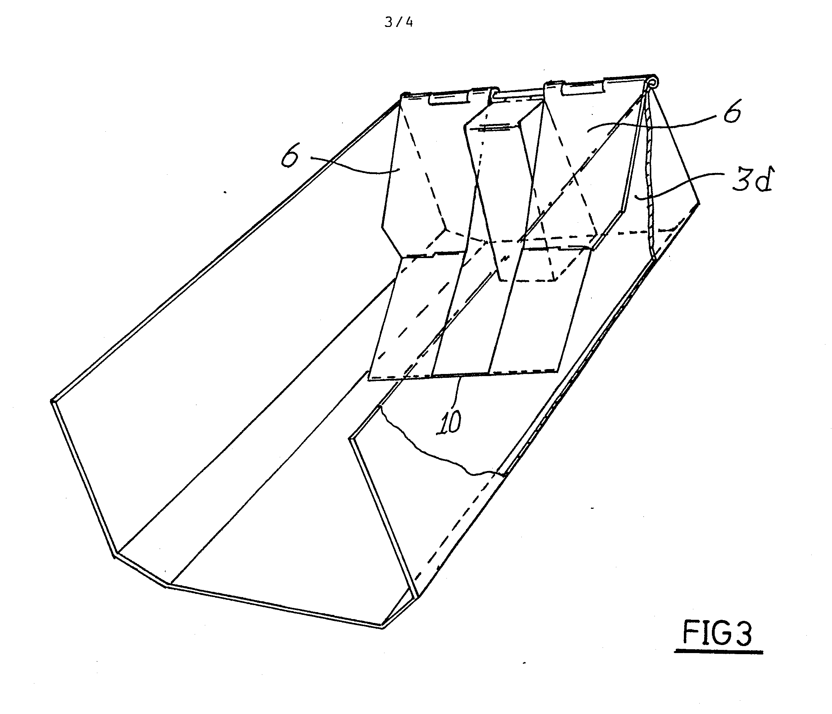

In the arrangement of Figure 3 two ejector assemblies 6 are provided and it will be seen that these are shaped to complement the configuration of the end wall of this load box of known configuration. The free ends of the false floor segments are interconnected by means of a rod 10 to ensure their operation in unison.

The ejector assembly may be provided with a return cable 80 connected at one end thereof to the lower end of plate 61 and passing through an aperture 81 in the end wall 3d and connected at its other end to an anchor 82 which is fast with the cab 4. It will be seen that the cable 80 would allow the ejector to operate as described above and would pull back the ejector when the load box is returned from an elevated to horizontal disposition.

Clearly many variations of the invention are possible. The invention extends to a tipper vehicle as described as well as to rail vehicles, to a load box as described and to an ejector arrangement adapted to be fitted to a tipper truck. The provision of an ejector assembly on a load box as described above has been found to improve the tipping efficiency of a tipper truck. It is considered that the false floor segment of the assembly on which a moving mass rests during the tipping operation plays a vital role in the effectiveness of the assembly and results in an arrangement which requires no external impetus imparting means of the type used with the prior art arrangements.

CLAIMS:

1.  A vehicle comprising a wheeled chassis and a load box mounted thereon for tipping movement relative to the chassis to discharge a load therefrom, the load box being constituted by a construction including a floor formation and a peripheral upstanding wall structure which wall structure defines a pair of opposed side walls, an end wall extending between the side walls at one end of the load box and a discharge zone disposed opposite the end wall, the vehicle being characterised in that the load box includes at least one ejector assembly disposed at or near the end wall and comprising a first plate element which extends upwardly and which is hingeably connected at the top edge thereof to the load box for pivotal movement about an axis which extends substantially parallel to two planes which respectively contain the end wall and the floor, and hingeably connected at the lower edge thereof to an edge of a second plate structure which second plate structure overlies part of the floor of the load box and which second plate structure includes contact zones at which it is in contact with the floor of the load box at least when the load box is in non-tipping disposition on the chassis.

2.  The vehicle of claim 1 wherein the load box is provided with a single ejector assembly having a first plate element of a shape complementary to the interior cross-sectional configuration of the load box in the area adjacent the end wall.

3.  The vehicle of claim 2 wherein the upper edge of the first plate element is connected to the upper edge of the end wall of the load box by means of any suitable hinge formation so that the first plate element overlies the end wall while the load box is in horizontal or transport disposition and hangs substantially vertically when the load box is in tipping disposition.

4. The vehicle of claim 1 wherein the load box is provided with a plurality of ejector assemblies disposed in side by side relationship and having first plate elements of a collective shape complementary to the interior cross-sectional configuration of the load box in the area adjacent the end wall.

5. The vehicle of any one of claims 1 to 4 wherein the second plate structure is provided along edges thereof with supplementary plate members which are pivotably connected to the second plate structure to provide a composite false floor arrangement which closely follows the floor configuration of the load box.

6. The vehicle of claim 5 wherein the plate formations are provided with suitable covers arranged to extend over the hinges to prevent direct contact between a load in the load box and hinges.

7. The vehicle of claim 5 wherein the free edges of the plate elements are trimmed by means of a wear resistant resilient material to ensure intimate contact between the plate elements and the side walls and floor of the load box, yet preventing excessive wear of the walls and floor.

8.  The vehicle of claim 1 wherein the contact zones of the second plate structure are constituted by a roller arrangement by which it is in contact with the floor of the load box.

9.  The vehicle of claim 1 wherein the arrangement includes means for ensuring the proper return of the ejector assembly to its load transport disposition upon the load box being lowered to its load transport disposition such means comprising a cable which is connected at its one end to the lower zone of the first plate element and connectable at its other end to an anchor arrangement fast with the chassis of the vehicle.

10. An ejector assembly comprising a first plate element and a second plate structure hingeably interconnected to one another along mating edges thereof, the opposing edge of the first plate element being hingeably interconnected to a mounting which is in turn adapted to be secured to the upper edge of an end wall of a load box.

11. A load box for a vehicle fitted with an ejector assembly as claimed in claim 10.

12. A vehicle substantially as herein described with reference to the accompanying drawings.

13. A load box for a tipping vehicle substantially as herein described with reference to the accompanying drawings.

14.   An ejector assembly substantially as herein described with reference to the accompanying drawings.

0125115

FIG1

6

9

70

61

3d

62b

62a

62

FIG 2

FIG3

0125115

FIG 4

0125115

## DOCUMENTS CONSIDERED TO BE RELEVANT

| Category | Citation of document with indication where appropriate, of relevant passages | Relevant to claim | CLASSIFICATION OF THE APPLICATION (Int Cl ³) |
|---|---|---|---|
| D,A | US-A-3 688 944  (GAGEL) <br> * Claim 1; figure 3 * | 1-3 | B 65 F  3/26 <br> B 60 P  1/28 |
| A | FR-A-2 140 849  (SEMAT) <br> * Claims 4,5 * | 1,9 | |
| D,A | US-A-2 826 321  (NELSON) <br> * Claim 1; figure 2 * | 1-3 | |
| D,A | US-A-2 561 608  (BOISSONNAULT) <br> * Whole document * | 1-3 | |

TECHNICAL FIELDS
SEARCHED (Int. Cl. ³)

B 65 F
B 60 P

The present search report has been drawn up for all claims

| Place of search | Date of completion of the search | Examiner |
|---|---|---|
| THE HAGUE | 27-06-1984 | SCHMITTER J.M. |